# EUROPEAN PATENT APPLICATION

(11) **EP 0 999 151 A2**
(43) Date of publication of application: **10.05.2000**
(21) Application number: 99440295.6
(22) Date of filing: 29.10.1999
(51) Int. Cl.: B65G 15/12

(54) **Low friction buffer device for conveying/accumulating packages**

(30) Priority: 03.11.1998 IT MI982355
(71) Applicant: ALCATEL, 75008 Paris (FR)
(72) Inventor: Monaco, Michele, 81054 San Prisco (Caserta) (IT); Passero, Adolfo, 81100 Caserta (IT); Reali, Lanfranco, 64010 Villa Lempa (Teramo) (IT)
(74) Representative: Schmidt, Werner Karl, Dipl.-Phys.

(57) **Abstract**

There is disclosed a low friction buffer device (10) for accumulating packages comprising at least a resilient endless belt (16) for dragging the articles extending over a substantially horizontal length, said at least one belt passing around at least one motorized roller means (22). In the device according to the invention, support members (18) extending longitudinally are provided which stand at a first height above a reference plane (12) and on which the packages are slidably set. The belt, when not loaded with the articles to be carried, is at a second height above said reference plane, which is greater than the first height. The belt is bent under the weight of the articles such that the latter are also in contact with the support. The friction between articles and belt is higher than the friction between articles and support in order that the articles can be transported by movement of the belt.

## Description

The present invention relates to the field of automated conveyance of packages, in particular it concerns a new friction buffer device for transporting/accumulating packages.

In many situations, it is necessary to convey package-like articles from a first location to a second location and collect such articles at this second location. Generally, the conveyance takes place in a horizontal direction. In the case where the articles to be conveyed are comparatively lightweight, generally conveying them does not constitute a problem; conversely, should they have a non negligible weight, it is necessary to provide for devices having special strength and power characteristics. The situation is still more complicated when carrying articles of different weights, i.e. in part comparatively light and in part of a non negligible weights.

The systems presently known in this field (US 4.221.288; US 4.088.224 and US 4.308.946) provide for a plurality of carrier rollers all rotatable in the same direction whose axes of rotation are parallel and coplanar; the articles to be carried are set on such rollers. The problem of these systems is that they do not easily carry very heavy articles or anyway they must be oversized (high power of the motors) if the possibility of carrying such heavy articles is wished.

Mechanical systems using driving pulleys are also known which rotate endless belts sustaining the articles to be carried/accumulated. The belts that sustain and carry the articles slide on smooth surfaces and obviously engage the races of the pulleys. It is thus appreciated that, on the one hand, they must have a low coefficient of friction (in order to be able to slide on smooth surfaces without problems) and, on the other hand, they must have a high coefficient of friction (in order to effectively engage both the pulleys and the package to be carried). From these contrasting requirements, problems often arise, especially when heavy articles are to be carried (the weight of such articles urges the belts against the smooth surfaces) and when the velocity of the conveyor is high (because of the low friction between belt and pulley, the latter could rotate without dragging the belt).

Besides the above drawbacks, the known devices are also unreliable, expensive and suffer from environmental conditions, particularly from humidity and temperature.

In view of the above state of the art, it is the main object of the present invention to provide a device for accumulating articles, in particular packages or envelopes (which for the purpose of the present invention are considered equivalent), which is very reliable, simple and inexpensive and especially which is fundamentally independent of the weight of the articles to be accumulated/carried.

This and further objects are brilliantly achieved by the device for accumulating articles according to the appended claim 1 which is deemed to be an integral part of the present description. In the dependent claims, which are also deemed an integral part of the present description, further advantageous characteristics of the present invention are set forth.

There now follows a detailed description of the invention, given by way of a exemplifying and non limiting example thereof and to be read with reference to the attached illustrative drawings in which the various figures show:
- Fig. 1 shows a possible implementation of the device in accordance with the present invention while carrying an article in the form of a package; and
- Fig. 2 substantially shows, in an enlarged view, a detail of the device in accordance with the present invention.

In the two figures, the same reference characters naturally designate the same components or functionally equivalent parts.

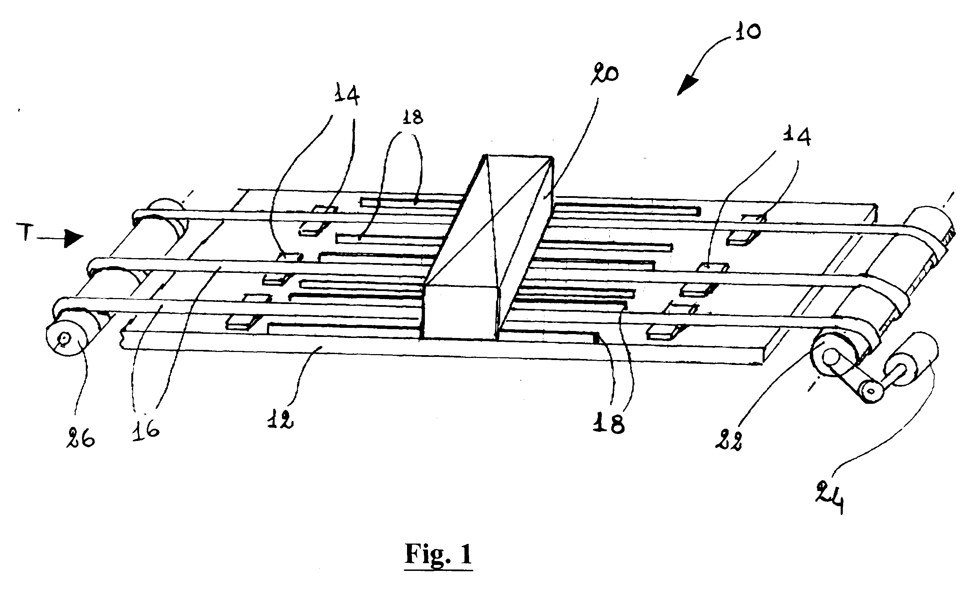

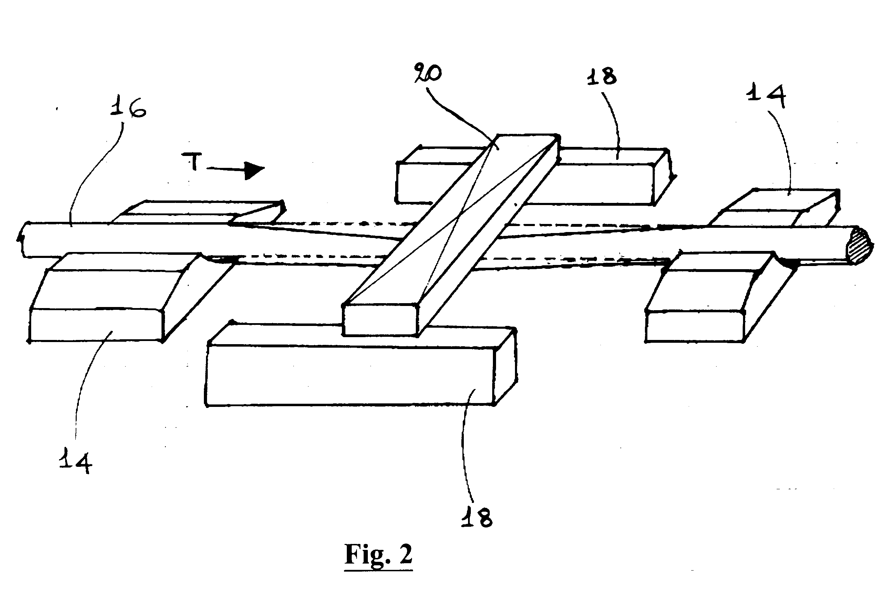

With reference to Fig. 1, the device 10 in accordance with the present invention comprises a supporting plane 12 mounted on which are guides 14 for belts 16 and longitudinal supports 18 for sustaining the articles 20 conveyed in the direction of arrow T or to be accumulated. A number (three in Fig. 1) of belts 16 are provided to drag the articles in the conveyance direction T. Such belts 16 pass around a first motorized roller 22, rotated by a motor 24, and a second idle roller 26. Looking at the device 10 according to the present invention in a non-conveyance condition (see the dashed portion of Fig. 2), the height of the longitudinal supports 18 (termed "first height") is lower than the height (termed "second height) of the belts 16 for dragging the articles 20. In other words, looking at the device 10 according to the present invention from the side while idling or anyway while it is not carrying any load, it will be realized that the belts 16 arise above the longitudinal supports 18. However, belts 16 are made of a resilient material and therefore, when an article 20 to be carried is set thereon, they bend, i.e. "belly" downwards. This elastic deflection causes an upward reaction which, along with the friction of the belt, effectively drags the article to be carried in the conveyance direction T, since it is greater than the friction between the package and the supports 18 whereon it abuts.

It will be understood that the weight of the article 20, which represented the big problem of the known devices, is now fully discharged on the longitudinal supports 18, and not on the belts 16, which supports 18 preferably exhibit a smooth surface with a low coefficient of friction (or with coefficient of friction anyway less than the one of the belts). Hence, in other words, the weight of the articles to be carried does not affect the force necessary to rotate the belts and, therefore, the power of the motor 24.

In a further possible embodiment of the invention (not shown), the supports 18 are fundamentally constituted by the plane 12 itself. In such a case the belts 16 project upwardly with respect to such a plane and proper longitudinal slots under them are provided so that they become bent and at the same high of the plane 12 when they support one or more packages. Thus, in other words, "support means" 18 also includes the plane itself and "the first height" could be equal to zero.

As to the cross-sectional shape of the belts 16, it can be any, as e.g. circular, trapezoidal, flat, etc.. but, since it is preferable to have a thickness which is non negligible as compared with the width (thick belt) to ensure strength and elasticity, the preferred shapes are the trapezoidal (V-belt) and the circular ones. Cog belts cannot be excluded for a better frictional contact on the driving rollers or pulleys.

For completeness of description it is pointed out that the device according to the present invention operates in such a way as to accumulate the articles, should they be packages, envelopes or the like, in the sense that in the vicinity of the end opposite to the article loading end, a fixed plate is provided to stop the articles one against another. As an alternative, a terminal area could easily be provided in which the belts are automatically lowered below the tops of supports 18 so that they cannot come into frictional contact with the articles.

It is apparent that numerous modifications, adaptations, variations and substitutions of parts by functionally equivalent ones may be imparted to the embodiment illustrated and described in detail above without departing anyway from the scope of the following claims.

## Claims

1. Low friction device (10) for conveying/accumulating package-like articles comprising at least one endless belt (16) for dragging the articles, extending for a substantially horizontal length, said at least one belt (16) passing around at least one motor-driven roller means (22), characterized in that it further comprises at least one support member (18) extending longitudinally, which defines a first height above a reference plane (12), said at least one belt defining a second height above said reference plane (12), which is greater than the first height when the belt is not loaded with the articles to be conveyed and is substantially equal to the first height, at least locally, when an article of a certain weight is set thereon.

2. Device according to claim 1, characterized in that said at least one support (18) extending longitudinally comprises an upper surface having a coefficient of friction lower than that of said at least one belt and on which the articles (20) to be carried are set in a slidable manner.

3. Device according to claim 1 or 2, characterized in that said belt (16) is made of a material having a coefficient of friction higher than that of said at least one support member (18) extending longitudinally, the elastic reaction of said at least one belt loaded with the articles (20) to be carried producing a pressure that combines with the friction between the articles to be carried and the at least one belt (16) to ensure the conveyance of said articles (20).

4. Device according to any of the preceding claims, characterized in that said at least one belt has a thick cross-section, preferably a circular cross-section.
